# EUROPEAN PATENT APPLICATION

(11) **EP 4 656 452 A1**
(43) Date of publication of application: **03.12.2025**
(21) Application number: 24178913.0
(22) Date of filing: 29.05.2024
(51) Int. Cl.: B60N 2/02, B60N 2/427, B60N 2/829, B60N 2/853, B60N 2/865, B60N 2/888

(54) **CRASH SAFETY DEVICE FOR VEHICLE SEAT**

(71) Applicant: Volvo Car Corporation, 405 31 Göteborg (SE)
(72) Inventor: Heurlin, Fredrik, SE-405 31 Göteborg (SE); Björklund, Magnus, SE-405 31 Göteborg (SE); Setterberg, Peter, SE-405 31 Göteborg (SE); Adolfsson, Peter, SE-405 31 Göteborg (SE); Bohman, Katarina, SE-405 31 Göteborg (SE); Carlsson, Andreas, SE-405 31 Göteborg (SE); Östh, Jonas, SE-405 31 Göteborg (SE); Rosenberg, Johan, SE-405 31 Göteborg (SE)
(74) Representative: Nederlandsch Octrooibureau

(57) **Abstract**

A method and control unit for adjusting an adjustable vehicle seat is provided. The method comprising: obtaining environmental information, the environmental information being indicative of a probability of a crash event; determining a probability of a crash event to occur based on the obtained environmental information; and when the probability is higher than a crash threshold, obtaining occupant information being representative of current information about the occupant, and seat position information being indicative of the current vehicle seat position; and based on the occupant information and the seat position information: determining a seat adjustment; and adjusting, the adjustable vehicle seat, in accordance with the determined seat adjustment, from an initial position toward an optimal crash position until the optimal crash position is reached or, if the crash event occurs, until the crash event has occurred, wherein, for the determined seat adjustment, the adjustable vehicle seat is adjusted so that a maximum distance between at least a part of the adjustable vehicle seat and an occupant of the adjustable vehicle seat is maintained at, or below, a distance threshold indicative of a maximum gap between the occupant and the vehicle seat.

## Description

### TECHNICAL FIELD

The present disclosure relates to a method for controlling adjustment of an adjustable vehicle seat and to a control unit configured to execute such method. The present invention also relates to a crash safety system for adjusting an adjustable vehicle seat in the event of a potential crash and a vehicle comprising the crash safety system.

### BACKGROUND ART

Vehicle seats are well known for being configured to protect an occupant seated in the vehicle seat from injuries in a crash event or collision. In the event of a crash, or collision, there is a risk that the head of an occupant sitting in a seat of the vehicle will snap forwards and backwards suddenly due to inertia force, resulting in an injury to the neck. For this reason, vehicle seats have headrests that supports the head of the occupant from sudden movements caused by crashes or collisions, particularly front-end collisions and rear-end collisions. Thereby the impact on the neck of the occupant is reduced. However, there is still room for further reducing the effects on the human body in the event of a crash.

### SUMMARY

According to an embodiment, a method for adjusting an adjustable vehicle seat is provided. The method comprises obtaining environmental information, the environmental information being indicative of a probability of a crash event; determining a probability of a crash event to occur based on the obtained environmental information; when the probability is higher than a crash threshold. The crash threshold may be a minimum probability of a crash event. The method may be executed when the crash threshold is satisfied. The method may further obtain occupant information, the occupant information being representative of current of information about the occupant, and seat position information, the seat position information being representative of current vehicle seat information; and based on the occupant information and the seat position information: determining a seat adjustment; and adjusting, the adjustable vehicle seat, in accordance with the determined seat adjustment, from an initial position toward an optimal crash position until the optimal crash position is reached or, if the crash event occurs, until the crash event has occurred, and wherein, for the determined seat adjustment, the adjustable vehicle seat is continuously adjusted so that a maximum distance between at least a part of the adjustable vehicle seat and an occupant of the adjustable vehicle seat is maintained at, or below, a distance threshold, the distance threshold being indicative of a maximum gap between the occupant and the vehicle seat.

The present method provides an improved safety system due to the adjustment of the vehicle seat to an optimal crash position based on the environmental information, seat position information, and occupant information. Other information may be used to determine the optimal crash position and adjust the vehicle seat to the optimal crash position. Adjusting the vehicle seat to the optimal crash position by maintaining a gap between the occupant and the vehicle seat equal or below a threshold will minimize the impact energy in the head, neck, and/or body of the occupant by increasing the probability and effect of the head, neck and/or upper body being cushioned by the head rest and/or seat back, also referred to as a backrest, during the crash event, thereby preventing or reducing the risk of injuries for the occupant of the vehicle seat, and maximizing the safety performance. When herein referring to "seat" what is considered is a vehicle seat. "Seat" and "vehicle seat" are used interchangeably herein.

Furthermore, the present method also provides an improved safety system by taking into account whether the optimal crash position has been reached or whether the crash event is over. In case the initial position is relatively close to the optimal crash position, the optimal crash position can be quickly reached before or immediately after the crash event occurs. The method may include considering a seat position divergence threshold, the seat position divergence threshold being indicative of the difference between the initial position of the vehicle seat and the optimal position of the vehicle seat during a crash event, and compare the difference between the initial position and the optimal crash position with the seat position divergence threshold. The method may require that the seat position divergence threshold is satisfied before adjusting the position of the vehicle seat.

If the seat is in a position that greatly differs from the optimal crash position, the seat adjustment may have to be slowly so that it does not produce excessive force on the occupant. For example, the seat position divergence threshold may reflect a difference in an angle between the seat bottom and the seat back at the initial position and at the optimal crash position. If the seat position divergence threshold is set to 25 degrees and the difference between initial position and optimal crash position is lower than 25 degrees, the method may adjust the seat position. However, in case the difference between the initial position and the optimal crash position is above the seat position divergence threshold, the method may trigger a further step to determine how to adjust the seat position to avoid having the seat in a non-optimal crash position, or too far from optimal position, during, or shortly after, the crash event. For example, if the seat back is highly reclined relative to the seat bottom at the initial position, the angle difference between the seat bottom and the seat back at the initial position and at the optimal crash position may be greater than the seat position divergence threshold. Thus, the system may consider whether the seat can be adjusted safely to reach the optimal crash position before the crash event occurs. Adjusting the position too fast may cause the occupant of the vehicle seat to be pushed forward, which is not desirable. Therefore, the method may perform adjustments during the crash event until the crash event is over to minimize undesired movements of the occupant.

According to an embodiment, obtaining the occupant information comprises receiving, from at least one first sensor, a (first) set of data representative of current information about the occupant; and obtaining the seat position information comprises receiving, from the at least one first sensor, a (second) set of data representative of current vehicle seat position; and wherein obtaining the optimal crash position is based on the occupant information and crash information, wherein the crash information comprises information about the crash event and is estimated based on the environmental information. Optionally, the occupant information comprises at least one of a current occupant position, an occupant weight, an occupant height, an occupant torso length, and an occupant size.

Typically, in case of a crash event, the standard position for the vehicle seat is upright. However, by taking into account the occupant information and crash information, the optimal crash position is customized to the different occupants and crash events, thereby providing one optimal crash position per occupant of a vehicle involve in a crash event.

According to an embodiment, adjusting the vehicle seat comprises at least one of: adjusting an angle between a seat bottom of the vehicle seat and a seat back of the vehicle seat, adjusting an angle between a seat back and a head rest of the vehicle seat; adjusting a height of the head rest of the vehicle seat relative to the seat back; adjusting a height of the vehicle seat relative to a vehicle floor; moving the head rest forwards or backwards with respect to the seat back; and moving the vehicle seat forwards or backwards with respect to the vehicle floor.

Adjusting an angle between a seat bottom of the vehicle seat and a seat back of the vehicle seat can help reduce pressure on the upper and lower back of the occupant by reducing the distance between the back of the occupant and the seat rest, thereby preventing or reducing injuries in the event of a crash. By adjusting an angle between a seat back and a head rest of the vehicle seat, whiplash associated disorders are prevented or minimized by reducing the distance between the back of the head of the occupant and the head rest, stopping the neck from bending back.

By adjusting a height of the head rest of the vehicle seat relative to the seat back, pressure on the cervical region can be prevented or reduced even before potential damage occurs, increasing the effectiveness of protection. For example, a head rest that is set too low may not protect against a sudden and strong bending of the head backward, which can result in serious injury. Similarly, by moving the head rest forwards or backwards with respect to the seat back, protection against a sudden and strong bending of the head is provided.

Occupants may adjust seat height for individual comfort and ease of getting in and out of the vehicle. However, in a crash event, the higher the seat is placed with respect to the floor of the vehicle, the higher the probabilities of misplacement of seat belt and/or airbag are, thereby the risk of injuries increases. Additionally, the method may determine an optimal seat height based on a probability of a crash event and a predicted rebound. For example, if the predicted rebound may result is an impact between the occupant and a vehicle dashboard, the method may raise or lower a seat height to avoid the collision. The method, may adjust a height of the vehicle seat relative to a vehicle floor, to protect against occupant injuries. Similarly, by moving the vehicle seat forwards or backwards with respect to the vehicle floor, the protection against injuries increases.

According to an embodiment, the optimal crash position is obtained by using a database storing a plurality of optimal crash positions, or by using machine learning techniques. Optionally, the database can be stored in the vehicle or can be stored in a server to which the vehicle has access through a communication module, or a combination thereof. For example, in case of crash event in a remote region, or in a region without or with low external communication, by storing the plurality of optimal crash positions in a database within the vehicle, an optimal crash position adequate for the (potential) crash event can be quickly obtained without mediation of external devices (e.g. server), thereby improving the safety performance. In case of storing the database in a server, vehicles may communicate with the server to update the database and the server may quickly broadcast to a plurality of vehicles. The database is updated with information transmitted from the vehicles to the server hosting the dataset. Alternatively, the optimal crash position can be obtained by using machine learning techniques. These machine learning techniques use algorithms, such as for example a decision tree algorithm, Support Vector Machine (SVM) algorithm, Naive Bayes algorithm, K-Nearest Neighbors (KNN) algorithm, Random Forest algorithm, and the like. By using a machine learning technique, a large amount of crash data can be analyzed to find the trends and patters which allow to find the most optimal crash position for a vehicle seat with dependency of the occupant information and crash information, thereby improving the accuracy of the optimal crash position.

According to an embodiment, the optimal crash position includes at least one of an optimal position of a seat bottom, an optimal position of a seat back and an optimal position of a head rest.

According to an embodiment, the occupant information and/or seat position information is continuously collected over time. Alternatively, the occupant information and/or seat position information is collected from a time point at which the probability of an imminent crash or collision is higher than a crash threshold. By starting collecting the occupant information and/or seat position information when the probability is higher than a crash threshold, a more energy efficient system is provided. Optionally, the seat position information can be collected at a first predetermined time frequency. Optionally, the occupant information can be collected at a second predetermined time frequency. The first predetermined time frequency and the second predetermined time frequency can be equal or different to each other. For example, the first predetermined time frequency and/or the second predetermined time frequency can be 20 milliseconds (msec), 10 milliseconds or 5 milliseconds.

According to an embodiment, the crash event comprises a front crash event or a rear crash event. A front crash event (or front-end crash event or front-end collision) occurs when a vehicle moving forward hits an obstacle (e.g. another vehicle, a tree, etc.) in front of it. A rear crash event (or rear-end crash event or rear-end collision) are caused by another vehicle hitting the vehicle from behind or by moving backwards the vehicle into an obstacle.

According to an embodiment, a control unit configured to control adjustment of an adjustable vehicle seat is provided. The control unit being configured to: obtain environmental information, the environmental information being indicative of probability of a crash event; determine a probability of a crash event to occur based on the obtained environmental information; when the probability is higher than a crash threshold, obtain occupant information and seat position information; and based on the occupant information and the seat position information: determine a seat adjustment, and provide instructions to a seat adjusting module, of the adjustable vehicle seat, to adjust the vehicle seat in accordance with the determined seat adjustment, wherein determine the seat adjustment and thereafter provide instructions enables the adjustable vehicle seat to be adjusted from an initial position toward an optimal crash position, until the optimal crash position is reached or, if the crash event occurs, until the crash event is over, and wherein the adjustable vehicle seat is adjusted to that a maximum distance between at least a part of the adjustable vehicle seat and an occupant of the adjustable vehicle seat is maintained at, or below, a distance threshold.

According to an embodiment, a crash safety system for adjusting an adjustable vehicle seat in the event of a potential crash is provided. The system comprises a control unit, and a seat adjusting module configured to adjust the adjustable vehicle seat, and to obtain instructions for adjusting the adjustable vehicle seat, wherein adjusting the adjustable vehicle seat comprises at least one of: adjusting an angle between a seat bottom of the vehicle seat and a seat back of the vehicle seat, adjusting an angle between a seat back and a head rest of the vehicle seat; adjusting a height of the head rest of the vehicle seat relative to the seat back; adjusting a height of the vehicle seat relative to a vehicle floor; moving the head rest forwards or backwards with respect to the seat back; and moving the vehicle seat forwards or backwards with respect to the vehicle floor.

According to an embodiment, the crash safety system comprises at least a first sensor for collecting at least one of a (first) set of data representative of current information about the occupant and a (second) set of data representative of a current vehicle seat position, and at least a second sensor for collecting the environmental information. Optionally, the first sensor comprises at least one of an image sensor, a weight sensor, a RADAR sensor and a seat position sensor; and/or wherein the second sensor comprises at least one of a Light Detection and Ranging, LIDAR, sensor, a Radio Detection and Ranging, RADAR, sensor and an image sensor.

According to an embodiment, a vehicle comprising the crash safety system is provided. Optionally, the vehicle is configured for operating in an autonomous drive (AD) mode. A vehicle operating in autonomous drive (AD) mode do not require of human interaction. Therefore, vehicles with AD mode will result in new user behaviors in the vehicle such as resting in highly reclined back rest angles during AD mode to sleep and/or rest while vehicle is travelling. This new user behavior rearward for more space during travel. However, in the event of a crash there is always a rebound after the maximum forward movement of the occupant. By the present configuration of the vehicle seat, even if the difference between the current position of the seat rest and the optimal position is high (e.g. the angle difference is more than 45 degrees), the crash safety system allows for continuously adjusting the seat rest, thereby controlling and cushioning the rebound by the seat rest and head rest in a more efficient way which will reduce the risk of injuries due to the rebound in the occupant.

According to embodiments, environmental information may also be referred to as; third set of data, indicative of a probability of a crash event, or just; data indicative of a probability of a crash event.
According to embodiments, occupant information may also be referred to as; first set of data, being representative of current information about the occupant, or just: data representative of current information about the occupant.
According to embodiments, seat position information may also be referred to as second set of data, being representative of current vehicle seat position, or just; data representative of current vehicle seat position.
According to embodiments, seat adjustment may also be referred to as; seat adjustment instructions indicative of a seat adjustment or how to adjust the vehicle seat, or just; data indicative of a seat adjustment or how to adjust the vehicle seat.
According to embodiments, crash information comprises information about the crash event and is estimated based on the environmental information, and may also be referred to as: fourth set of data comprising information about, or being representative of, the crash event, or just; data comprising information about, or being representative of, the crash event.
According to embodiments, crash threshold may also be referred to as first threshold, indicative of a risk level at which the method should be executed, or just threshold indicative of a risk level at which the method should be executed.
According to embodiments, distance threshold may also be referred to as; second threshold, indicative of a maximum gap between the occupant and the vehicle seat, or just; threshold indicative of a maximum gap between the occupant and the vehicle seat.
According to embodiments, seat position divergence threshold may also be referred to as; third threshold, indicative of the difference between the initial position of the vehicle seat and the optimal position of the vehicle seat during a crash event, or just; threshold, indicative of the difference between the initial position of the vehicle seat and the optimal position of the vehicle seat during a crash event. "Indicative of' and "representative of' are herein used more or less interchangeably.

According to an embodiment, a vehicle may comprise one or more accelerometers to measure acceleration forces acting on the vehicle, seats within the vehicle, or any other object within the vehicle. The measurements of the acceleration forces may further serve as environmental information input to determine a probability of a crash event or determine a movement or reaction of an object as a result of a crash event. Determining the optimal crash position may further be based on the determined movement of a seat as a result of a crash event. For example, if the seat is determined to move during a predicted crash event, determining the optimal crash position may take the determined seat movement into account to eliminate or reduce the risk of injury to an occupant.

The person skilled in the art will understand that the features described above may be combined in any way deemed useful.

### BRIEF DESCRIPTION OF DRAWINGS

The present disclosure will be described in more detail with reference to the drawings that show preferred embodiments of the present disclosure:
FIG. 1 shows a schematic of a crash safety system for adjusting an adjustable vehicle seat according to at least one example of the disclosure.
FIG. 2 shows a schematic of a method for adjusting an adjustable vehicle seat according to one example of the disclosure.
FIG. 3A to 3D show schematically an occupant on an adjustable vehicle seat according to at least one example of the disclosure.

### DESCRIPTION OF EMBODIMENTS

The aspects of the present disclosure will now be described more fully hereinafter with reference to the accompanying drawings, in which certain embodiments of the disclosure are shown. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to Scale. Throughout this disclosure, depending on the context, singular and plural terminology may be used interchangeably.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

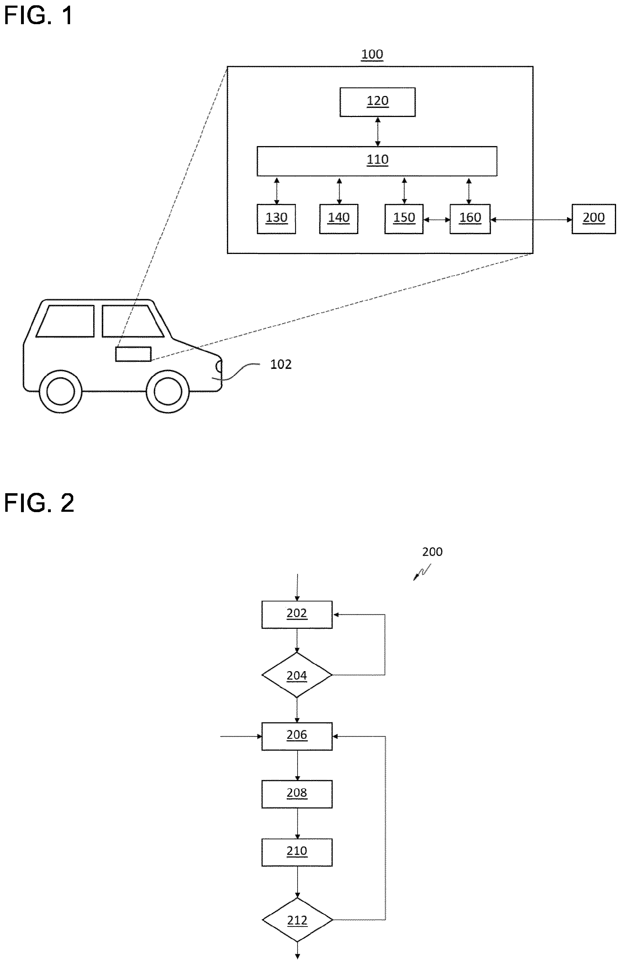

FIG. 1 shows a schematic of a crash safety system 100 for adjusting an adjustable vehicle seat according to at least one example of the disclosure. FIG. 1 shows a vehicle 102 comprising the crash safety system 100. The crash safety system 100 comprises a control unit 110, a seat adjusting module 120, a first sensor 130 and a second sensor 140. The control unit 110 and the seat adjusting module 120 are communicatively coupled, as well as each of the first sensor 130 and the second sensor 140 which are communicatively coupled with the control unit 110. Optionally, the control unit 110 and the seat adjusting module 120 can be integrated in a single module. The crash safety system 100 may comprise further modules and/or components, for example additional sensors.

The seat adjusting module 120 is configured to receive instructions from the control unit 110 and to adjust an adjustable vehicle seat (not shown) of the vehicle 102. The seat adjusting module 120 can receive the instructions from the control unit 110 by wire or wirelessly. The seat adjusting module 120 can include at least one motor (not shown) configured to adjust (e.g. move and/or rotate) the vehicle seat according to the instructions received from the control unit 110.

The second sensor 140 collects environmental information. The environmental information can include an image of the surroundings of the vehicle 102 (e.g. a road in front of and/or at the back of the vehicle 102), information regarding a trajectory of the vehicle 102, information regarding a speed of the vehicle 102, information regarding an acceleration or deceleration of the vehicle 102, information regarding a position of an obstacle (e.g. another vehicle, an animal, a tree and the like) in the trajectory of the vehicle 102, or any combination thereof. Based on the information included in the environmental information, a probability a crash event to occur can be determined. Consequently, the environmental information indicates the probability of the crash event to occur. The control unit 110 is configured to obtain the environmental information from the second sensor 140. The control unit 110 can obtain the environmental information from the second sensor 140 by wire or wirelessly. According to embodiments, the control unit 110 may also obtain environmental information from one or more additional sensors or from data repositories, databases etc. storing data relevant for assessing the probability of a crash event to occur. Such data repositories or databases may, for example, be located in a remote server or cloud based solution.

The second sensor 140 includes at least one of a Light Detection And Ranging, LIDAR, sensor, a Radio Detection And Ranging, RADAR, sensor, an accelerometer and an image sensor. A LIDAR sensor uses light in the form of a pulsed laser to measure distances. A RADAR sensor uses radio waves to detect objects and measure their speed (or velocity) and distance. Because both LIDAR and RADAR sensors are active sensors as they generate their own signals external lighting conditions do not affect them. That is, both RADAR and LIDAR can perfectly function in total darkness and in direct sunlight. An image sensor detects natural radiation or emission from the environments (e.g. sunlight or artificial light of cameras Image sensors are passive sensors. Passive sensors are more energy-efficient than active sensors.

The control unit 110 is configured to determine a probability of a crash event to occur based on the obtained environmental information. For example, in case that the environmental information indicates that an obstacle is in the trajectory of the vehicle 102, the control unit 110 determines, based on the position of the obstacle and the deceleration of vehicle 102, that the probabilities of a crash event with the obstacle are high (e.g. 80%). For example, in case that that the environmental information indicates that an obstacle is in the trajectory of the vehicle 102 and the velocity of the vehicle 102 indicates that the vehicle 102 will likely be able to stop before colliding with the obstacle, the control unit 110 determines that the probabilities of a crash event are low (e.g. 30%). For example, in case that the environmental information indicates that there is no obstacles in the trajectory of the vehicle 102, the control unit 110 determines that the probabilities of a crash event are very low (e.g. 0%).

Optionally, the system 100 may comprises a crash probability module (not shown). The crash probability module includes a first control unit (not shown) configured to determine, for example by calculating, a probability of a crash event to occur based on the obtained environmental information. Optionally, the second sensor 140 can be included in the crash probability module.

According to embodiments, the crash threshold is indicative a risk level at which the method should be executed. When the determined crash probability is higher than a crash threshold (e.g. 70%, 75% or 80%), the control unit 110 is configured to obtain occupant information and seat position information. The first sensor 130 collects a (first) set of data representative of current information about the occupant and a (second) set of data representative of current vehicle seat position, and transmits the current occupant information and the current seat position information to the control unit 110. The occupant information comprises at least one of a current occupant position, an occupant weight, an occupant height, an occupant torso length, an occupant leg length, an occupant size, and the like.

The first sensor 130 includes at least one of an image sensor, a weight sensor, a RADAR sensor and a seat position sensor. The weight sensor can be incorporated in the vehicle seat for detecting the weight of an occupant of the vehicle seat. The seat position sensor provides the seat position information and is a sensor designed to detect and monitor various parameters related to seating arrangements in a vehicle like an angle between the seat bottom and the seat back, an angle between the seat back and the head rest, a position of the head rest relative to the seat back, a position of the vehicle seat relative to the vehicle floor, and the like. Consequently, the seat position information, being representative of current vehicle seat position, may comprise information about an angle between the seat bottom and the seat back, an angle between the seat back and the head rest, a position of the head rest relative to the seat back, and a position of the vehicle seat relative to the vehicle floor.

The control unit 110 determines an adjustment for the adjustable vehicle seat, based on the occupant information and the seat position information, such that a maximum distance between a part of the adjustable vehicle seat and the occupant of the adjustable vehicle seat is maintained at, or below, a distance threshold. For example, by maintaining the maximum distance between the head of the occupant and the head rest equal to or below the distance threshold (e.g. 5 cm), injuries can be prevented or minimized.

For example, based on the (first) set of data representative of current information about the occupant and collected from the first sensor 130 which represents the occupant information, a 3D image of the occupant can be determined. Based on this 3D image of the occupant and the position of the seat indicated by the seat position information, the control unit 110 can determine the relative position of the occupant with respect to the vehicle seat, and therefore, the control unit 110 can identify the distance between a part of the occupant and a part of the vehicle seat. Alternatively, instead of a complete 3D map of the occupant, a partial 3D map can be obtained, for example a 3D front part image of the occupant opposite to vehicle seat. In this case, the control unit can infer the remaining 3D parts of the 3D image of the occupant by using standard measurements. For example, since a distance between a front head and the back of the head of an adult is predetermined by (medical) standards, the control unit 110 can infer the position of the back of the head by using the position of the front of the head and the standard distance between the front of the head and the back of the head for an adult. Other standard measurements can be used as these measurements may depend on occupant weight, height, and the like.

Once the adjustment is determined, the control unit 110 transmits instructions to the seat adjusting module 120 to adjust the vehicle seat according to the determined adjustment.

The control unit 110 will keep determining adjustments for the adjustable vehicle seat based on the occupant information and the seat position information and transmitting instructions to the seat adjusting module until the optimal crash position is reached or, if the crash event occurs, until the crash event is over.

Optionally, the control unit 110 determines when the optimal crash position is reached based on the (second) set of data representative of the current seat position.

Optionally, the control unit 110 determines when the crash event is over, if the crash event occurs, based on data obtained from the second sensor 140. Since during a crash event a part of the vehicle may have a different acceleration and/or velocity than another part of the vehicle, sensors in different parts of the vehicle provide different measurements. This difference in the measurements (e.g. acceleration/deceleration) indicates that the crash event is still ongoing. For example, a part that has collided with an obstacle may have an acceleration/deceleration equal to zero while another part of the vehicle is still moving (i.e. acceleration/deceleration different that zero) due to an inertial force. In case that all sensors collect an acceleration/deceleration equal to zero, the crash event can be considered finished. It should be understood that during a crash event some sensors could be damaged and therefore could be unable to collect acceleration/deceleration (or any other information). In this case, since these damaged sensors are not able to collect information, they are not used for the determination of whether the crash event is over or still ongoing.

The control unit 110 can obtain the optimal crash position from a database. The database can be stored in a memory 150 integrated in the crash safety system 100. Alternatively, the control unit 110 can obtain the optimal crash position from a database stored in a server 200 (external to the vehicle 102) and to which the vehicle 102 can communicate through a communication module 160 integrated in the vehicle 102. Optionally, the optimal crash position obtained from the server 200 can be locally stored in the memory 150.

The memory 150 may comprise any suitable known memory devices to store data and/or instructions to be run on the control unit 110, and may include any known type of volatile and nonvolatile memory equipment, RAM and ROM types of memories, etc. The memory 150 may be used to store measurements collected by sensors and/or the database.

Alternatively, the control unit 110 can obtain the optimal crash position by using machine learning technique. Machine learning techniques allows to analyze a large among of crash data like occupant position information, vehicle seat position information, and crash information obtained from a large variety of vehicles and crash events over time, and to obtain and/or estimate the most suitable seat position (i.e. the optimal crash position) based on the obtained data. These machine learning techniques use algorithms, such as for example a decision tree model, Support Vector Machine (SVM) algorithm, Naive Bayes algorithm, K-Nearest Neighbors (KNN) algorithm, Random Forest algorithm, and the like.

Although, the optimal crash position has been described as a static position, the optimal crash position can also change dynamically during the occurrence of the crash event. For example, in case of a crash event involving multiple collisions, the optimal crash position can be adjusted according to a current situation of the crash event involving multiple collisions.

For clarification, when referring to optimal crash position, what is considered Is the position, given current available information, that is believed to be optimal, or as close to optimal as possible.

The communication module 160 is configured to transmit signals to, or towards, if some intermediate node is involved in the communication, and receive signals from equipment outside the control unit 110 such as for example the server 200. Any known and suitable transceiver equipment can be used for that purpose using any known, or still to be developed (standard) communication technique including 2G, 3G, 4G, 5G, Wifi, Bluetooth, NFC, etc. To that end the communication unit 310 may be connected to a network and an antenna.

FIG. 2 shows a schematic of a method 200 for adjusting an adjustable vehicle seat according to one example of the disclosure.

At step 202, environmental information is obtained. The environmental information is indicative of probability of a crash event. The environmental information can be collected by using the second sensor 140 of FIG. 1.

At step 204, a probability of a crash event to occur is determined based on the obtained environmental information. If the probability of the crash event to occur is equal to or lower than a crash threshold, the method goes back to step 202. If the probability of the crash event to occur is higher than a crash threshold, the method continues to step 206.

At step 206, occupant information and seat position information is obtained. The occupant information is representative of current information about the occupant. Seat position information being indicative vehicle seat position. Obtaining the occupant information can comprise receiving, from a first sensor 130, a (first) set of data representative of current information about the occupant; and obtaining the seat position information can comprise receiving, from the first sensor 130, a (second) set of data representative of current vehicle seat position. The optimal crash position is obtained based on the occupant information and crash information. The crash information comprises information about the crash event and is estimated based on the environmental information. The optimal crash position is obtained from a database or by using a machine learning technique as described in relation to FIG. 1.

At step 208, a seat adjustment is determined based on the occupant information and the seat position information. For the determined seat adjustment, the adjustable vehicle seat is adjusted such that a maximum distance between at least a part of the adjustable vehicle seat and an occupant of the adjustable vehicle seat is maintained at, or below, a distance threshold. The seat adjustment is a seat adjustment from an initial position toward an optimal crash position. The seat adjustment may occur until the optimal crash position is reached or, if the crash event occurs, until the crash event has occurred,

At step 210, the adjustable vehicle seat is adjusted according to the determined seat adjustment.

At step 212, it is determined whether the optimal crash position is reached or whether, if the crash event occurs, the crash event has finished. If the optimal crash position has not been reached or if the crash event has not been finished, the method 200 goes back to step 206. If the optimal crash position is reached or if the crash event has finished, the method 200 ends.

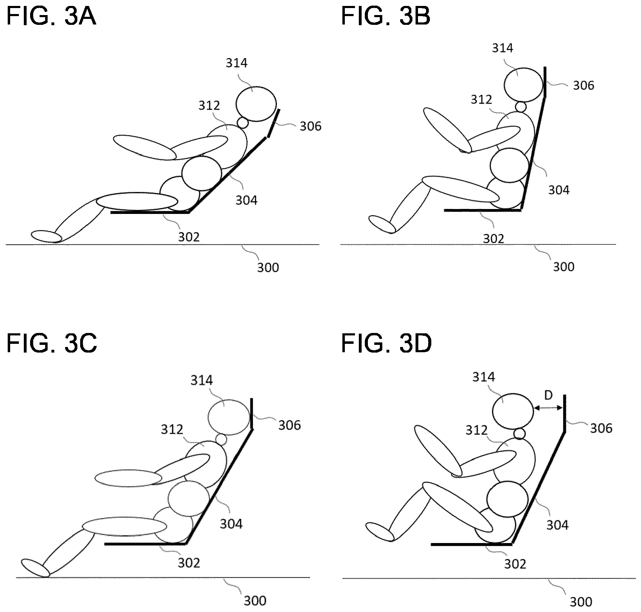

FIG. 3A to 3D show schematically an occupant on an adjustable vehicle seat according to at least one example of the disclosure. The adjustable vehicle seat includes a seat bottom 302 on which the occupant can be seated, a seat back 304 on which the upper body 312 (including the back) of the occupant can rest and a head rest 306 on which the head 314 of the occupant can rest. The seat back 304 is configured to be movable with respect to the seat bottom 302 and the head rest 306 movable with respect to the seat back 304. The seat bottom is also movable with respect to the vehicle floor 300.

FIG. 3A shows the adjustable vehicle seat in an initial position and FIG. 3B shows the adjustable vehicle seat in the optimal crash position. The initial position is different than the optimal crash position.

FIG. 3C shows the adjustable vehicle seat adjusted to a seat adjustment when the probability of a crash event to occur is higher than a crash threshold but the crash event is not currently happening. In this case, the occupant is not moving due to collision.

FIG. 3D shows the adjustable vehicle seat adjusted to a seat adjustment when a crash event is occurring. In case the crash event occurs (e.g. a rear crash event or a front crash event), the occupant of the vehicle first moves forward relative to the vehicle seat and afterwards moves backwards. Thus, in this case, the system determines a seat adjustment based on the position of the occupant and the position of the vehicle seat. The seat adjustment as shown in FIG. 3B shows that the seat back 304 has moved with respect to the seat bottom 302 to minimize the distance between the occupant and the seat back 204. The head rest 206 has also been moved to minimize the distance between the head 314 of the occupant and the head rest 306.

In the seat adjustment for the vehicle seat shown in FIG. 3B, the maximum distance (D) between the head 314 of the occupant and the head rest 306 is maintained equal to or bellow a distance threshold, allowing that the head 314 of the occupant and the head rest 306 to be close to each other. By maintaining this maximum distance at a minimum (this minimum indicated by the distance threshold), the head rest 306 will limit the backward movement of the head 314 of the occupant, relative to the upper body of the occupant, to prevent or minimize the whiplash or injury of the neck. That is, maintaining the maximum distance (D) between the head rest 306 and the head 314 of the occupant at, or below, a distance threshold allows for preventing that the neck (or cervical spine) of the occupant is overstretched in case of crash event.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

For further clarification of the disclosure, below follows additional exemplary embodiments of the disclosure:
Embodiment 1. A method (200) for adjusting an adjustable vehicle seat, the method comprising:
   - obtaining (202) environmental information, the environmental information indicative of a probability of a crash event;
   - determining (204) a probability of a crash event to occur based on the obtained environmental information; and
      when the probability is higher than a crash threshold, the crash threshold indicative of a risk level at which the method should be executed,
   - obtaining (206) occupant information, the occupant information being representative of current information about the occupant, and seat position information, the seat position information being indicative of the current vehicle seat position; and
   - based on the occupant information and the seat position information:
      ∘ determining (208) a seat adjustment; and
      ∘ adjusting (210,212), the adjustable vehicle seat, in accordance with the determined seat adjustment, from an initial position toward an optimal crash position until the optimal crash position is reached or, if the crash event occurs, until the crash event has occurred,
   - wherein, for the determined seat adjustment, the adjustable vehicle seat is adjusted so that a maximum distance between at least a part of the adjustable vehicle seat and an occupant of the adjustable vehicle seat is maintained at, or below, a distance threshold, the distance threshold indicative of a maximum gap between the occupant and the vehicle seat.
Embodiment 2. The method of Embodiment 1, wherein:
   - obtaining the occupant information comprises receiving, from at least one first sensor (130), a first set of data representative of current information about the occupant; and
   - obtaining the seat position information comprises receiving, from the at least one first sensor (130), a second set of data indicative of current vehicle seat information; and
   - obtaining the optimal crash position is based on the occupant information and crash information, wherein the crash information is indicative of the crash event and is estimated based on the environmental information.
Embodiment 3. The method of any preceding Embodiments, wherein the adjusting the vehicle seat comprises at least one of:
   - adjusting an angle between a seat bottom of the vehicle seat and a seat back of the vehicle seat,
   - adjusting an angle between a seat back and a head rest of the vehicle seat;
   - adjusting a height of the head rest of the vehicle seat relative to the seat back;
   - adjusting a height of the vehicle seat relative to a vehicle floor;
   - moving the head rest forwards or backwards with respect to the seat back; and
   - moving the vehicle seat forwards or backwards with respect to the vehicle floor.
Embodiment 4. The method of one of any preceding Embodiments, wherein the optimal crash position is obtained by using a database storing a plurality of optimal crash positions, or by using machine learning techniques.
Embodiment 5. The method of one of any preceding Embodiments, wherein the optimal crash position includes at least one of an optimal position of a seat bottom, an optimal position of a seat back and an optimal position of a head rest.
Embodiment 6. The method of one of any preceding Embodiments, wherein the obtained occupant information and/or seat position information is continuously collected over time or is collected from a time point at which the probability is higher than a crash threshold.
Embodiment 7. The method of one of any preceding Embodiments, wherein the crash event comprises a front crash event or a rear crash event.
Embodiment 8. The method of one of any preceding Embodiments, wherein the occupant information comprises at least one of a current occupant position, an occupant weight, an occupant height, an occupant torso length, and an occupant size.
Embodiment 9. A control unit (110) configured to control adjustment of an adjustable vehicle seat, the control unit being configured to:
   - obtain environmental information, the environmental information being indicative of probability of a crash event;
   - determine a probability of a crash event to occur based on the obtained environmental information; and
      when the probability is higher than a crash threshold, obtain occupant information, the occupant information being representative of current information about the occupant, and seat position information, the seat position information being indicative of the current vehicle seat position; and
   - based on the occupant information and the seat position information:
      ∘ determine a seat adjustment, and
      ∘ provide instructions to a seat adjusting module (120), of the adjustable vehicle seat, to adjust the vehicle seat in accordance with the determined seat adjustment,
   - wherein determine the seat adjustment and thereafter provide instructions enables the adjustable vehicle seat to be adjusted from an initial position toward an optimal crash position, until the optimal crash position is reached or, if the crash event occurs, until the crash event is over, and
   - wherein the adjustable vehicle seat is adjusted to that a maximum distance between at least a part of the adjustable vehicle seat and an occupant of the adjustable vehicle seat is maintained at, or below, a distance threshold, the distance threshold indicative of a maximum gap between the occupant and the vehicle seat.
Embodiment 10. The control unit according to Embodiment 9, wherein the control unit is configured to further perform any one of the methods of Embodiments 2 to 8.
Embodiment 11. A crash safety system (100) for adjusting an adjustable vehicle seat in the event of a potential crash, the system comprising:
   - a control unit (110) according to embodiment 9, and
   - a seat adjusting module (120) configured to adjust the adjustable vehicle seat and to obtain instructions for adjusting the adjustable vehicle seat,
   - wherein adjusting the adjustable vehicle seat comprises adjusting the vehicle seat according to embodiment 3.
Embodiment 12. The crash safety system of Embodiment 11, further comprising:
   - at least a first sensor (130) for collecting at least one of a first set of data representative of current information about the occupant and a second set of data representative of current vehicle seat position, and
   - at least a second sensor (140) for collecting the environmental information.
Embodiment 13. The crash safety system of Embodiment 12, wherein the first sensor (130) comprises at least one of an image sensor, a weight sensor, a RADAR sensor and a seat position sensor; and/or wherein the second sensor (140) comprises at least one of a Light Detection and Ranging, LIDAR, sensor, a Radio Detection and Ranging, RADAR, sensor, and accelerometer and an image sensor.
Embodiment 14. A vehicle (102) comprising the crash safety system (100) according to any one of Embodiments 11 to 13.
Embodiment 15. The vehicle of Embodiment 14, wherein the vehicle is configured for operating in an autonomous drive (AD) mode.
Embodiment 16. A method (200) for adjusting an adjustable vehicle seat, the method comprising:
   - obtaining (202) environmental information, the environmental information being indicative of a probability of a crash event;
   - determining (204) a probability of a crash event to occur based on the obtained environmental information; and
      when the probability is higher than a crash threshold,
   - obtaining (206) occupant information being representative of current information about the occupant, and seat position information being indicative of the current vehicle seat position; and
   - based on the occupant information and the seat position information:
      ∘ determining (208) a seat adjustment; and
      ∘ adjusting (210,212), the adjustable vehicle seat, in accordance with the determined seat adjustment, from an initial position toward an optimal crash position until the optimal crash position is reached or, if the crash event occurs, until the crash event has occurred,
   - wherein, for the determined seat adjustment, the adjustable vehicle seat is adjusted so that a maximum distance between at least a part of the adjustable vehicle seat and an occupant of the adjustable vehicle seat is maintained at, or below, a distance threshold indicative of a maximum gap between the occupant and the vehicle seat.
Embodiment 17. A control unit (110) configured to control adjustment of an adjustable vehicle seat, the control unit being configured to:
   - obtain environmental information, the environmental information being indicative of probability of a crash event;
   - determine a probability of a crash event to occur based on the obtained environmental information; and
      when the probability is higher than a crash threshold,
   - obtain occupant information being representative of current information about the occupant, and seat position information being indicative of the current vehicle seat position; and
   - based on the occupant information and the seat position information:
      ∘ determine a seat adjustment, and
      ∘ provide instructions to a seat adjusting module (120), of the adjustable vehicle seat, to adjust the vehicle seat in accordance with the determined seat adjustment, from an initial position toward an optimal crash position until the optimal crash position is reached or, if the crash event occurs, until the crash event has occurred,
   wherein the determined seat adjustment, the adjustable vehicle seat is adjusted so that a maximum distance between at least a part of the adjustable vehicle seat and an occupant of the adjustable vehicle seat is maintained at, or below, a distance threshold indicative of a maximum gap between the occupant and the vehicle seat..

## Claims

1. A method (200) for adjusting an adjustable vehicle seat, the method comprising:
- obtaining (202) environmental information, the environmental information being indicative of a probability of a crash event;
- determining (204) a probability of a crash event to occur based on the obtained environmental information; and
when the probability is higher than a crash threshold,
- obtaining (206) occupant information being representative of current information about the occupant, and seat position information being indicative of the current vehicle seat position; and
- based on the occupant information and the seat position information:
∘ determining (208) a seat adjustment; and
∘ adjusting (210,212), the adjustable vehicle seat, in accordance with the determined seat adjustment, from an initial position toward an optimal crash position until the optimal crash position is reached or, if the crash event occurs, until the crash event has occurred,
- wherein, for the determined seat adjustment, the adjustable vehicle seat is adjusted so that a maximum distance between at least a part of the adjustable vehicle seat and an occupant of the adjustable vehicle seat is maintained at, or below, a distance threshold indicative of a maximum gap between the occupant and the vehicle seat.

2. The method of claim 1, wherein:
- obtaining the occupant information comprises receiving, from at least one first sensor (130), a set of data representative of current information about the occupant; and
- obtaining the seat position information comprises receiving, from the at least one first sensor (130), a set of data representative of current vehicle seat information; and
- obtaining the optimal crash position is based on the occupant information and crash information, wherein the crash information comprises information about the crash event and is estimated based on the environmental information.

3. The method of any preceding claim, wherein the adjusting the vehicle seat comprises at least one of:
- adjusting an angle between a seat bottom of the vehicle seat and a seat back of the vehicle seat,
- adjusting an angle between a seat back and a head rest of the vehicle seat;
- adjusting a height of the head rest of the vehicle seat relative to the seat back;
- adjusting a height of the vehicle seat relative to a vehicle floor;
- moving the head rest forwards or backwards with respect to the seat back; and
- moving the vehicle seat forwards or backwards with respect to the vehicle floor.

4. The method of one of any preceding claim, wherein the optimal crash position is obtained by using a database storing a plurality of optimal crash positions, or by using machine learning techniques.

5. The method of one of any preceding claim, wherein the optimal crash position includes at least one of an optimal position of a seat bottom, an optimal position of a seat back and an optimal position of a head rest.

6. The method of one of any preceding claim, wherein the obtained occupant information and/or seat position information is continuously collected over time or is collected from a time point at which the probability is higher than a crash threshold.

7. The method of one of any preceding claim, wherein the crash event comprises a front crash event or a rear crash event.

8. The method of one of any preceding claim, wherein the occupant information comprises at least one of a current occupant position, an occupant weight, an occupant height, an occupant torso length, and an occupant size.

9. A control unit (110) configured to control adjustment of an adjustable vehicle seat, the control unit being configured to:
- obtain environmental information, the environmental information being indicative of probability of a crash event;
- determine a probability of a crash event to occur based on the obtained environmental information; and
when the probability is higher than a crash threshold,
- obtain occupant information being representative of current information about the occupant, and seat position information being indicative of the current vehicle seat position; and
- based on the occupant information and the seat position information:
∘ determine a seat adjustment, and
∘ provide instructions to a seat adjusting module (120), of the adjustable vehicle seat, to adjust the vehicle seat in accordance with the determined seat adjustment, from an initial position toward an optimal crash position until the optimal crash position is reached or, if the crash event occurs, until the crash event has occurred,
wherein the determined seat adjustment, the adjustable vehicle seat is adjusted so that a maximum distance between at least a part of the adjustable vehicle seat and an occupant of the adjustable vehicle seat is maintained at, or below, a distance threshold indicative of a maximum gap between the occupant and the vehicle seat..

10. The control unit according to claim 9, wherein the control unit is configured to further perform any one of the methods of claims 2 to 8.

11. A crash safety system (100) for adjusting an adjustable vehicle seat in the event of a potential crash, the system comprising:
- a control unit (110) according to claim 9, and
- a seat adjusting module (120) configured to adjust the adjustable vehicle seat and to obtain instructions for adjusting the adjustable vehicle seat,
- wherein adjusting the adjustable vehicle seat comprises adjusting the vehicle seat according to claim 3.

12. The crash safety system of claim 11, further comprising:
- at least a first sensor (130) for collecting at least one of a set of data representative of current information about the occupant and a set of data representative current vehicle seat position, and
- at least a second sensor (140) for collecting the environmental information.

13. The crash safety system of claim 12, wherein the first sensor (130) comprises at least one of an image sensor, a weight sensor, a RADAR sensor and a seat position sensor; and/or wherein the second sensor (140) comprises at least one of a Light Detection and Ranging, LIDAR, sensor, a Radio Detection and Ranging, RADAR, sensor, and accelerometer and an image sensor.

14. A vehicle (102) comprising the crash safety system (100) according to any one of claim 11 to 13.

15. The vehicle of claim 14, wherein the vehicle is configured for operating in an autonomous drive (AD) mode.
